# EUROPÄISCHE PATENTANMELDUNG

(11) **EP 0 901 806 A1**
(43) Veröffentlichungstag der Anmeldung: **17.03.1999**
(21) Anmeldenummer: 97115251.7
(22) Anmeldetag: 03.09.1997
(51) Int. Cl.: B01D 29/00, B01D 29/11, B01D 29/58, E03B 3/02, E04D 13/08

(54) **Verfahren und Vorrichtung zum Reinigen des Wassers**

(71) Anmelder: Neumüller, Peter, 63128 Dietzenbach (DE)
(72) Erfinder: Neumüller, Peter, 63128 Dietzenbach (DE)

(57) **Zusammenfassung**

Es wird ein Verfahren und eine Vorrichtung zur Ausübung des Verfahrens angegeben, wobei das Wasser über ein zylindrisches Gehäuse (1) mit mindestens 2 Siebvorrichtungen (6,9) geleitet wird. Der Schmutz wird von den schräggestellten Sieben selbstständig in den Kanal abgespült. Das gereinigte Wasser wird im separaten Behälter gesammelt. Über einen konischen Abweiser (7), der den Gehäusequerschnitt nur unwesentlich reduziert, wird das Wasser in einen Ringspalt (5) mit der Siebvorrichtung (9) geführt, in der eine Feinstfilterung vorgenommen wird. Damit sich im Ringspalt keine Schmutzpartikel festsetzen können, ist dieser mit einer grobmaschigen Siebvorrichtung (6) überdeckt, so daß Grobschmutz in den Kanalanschluß und fast das gesamte Wasser in der Ringspalt (5) geleitet wird.

## Beschreibung

Der Ersatz von Trinkwasser durch Wasser anderer Herkunft für Anwendungen, die keine Trinkwasserqualität erfordern, gewinnt in letzter Zeit stetig an Bedeutung. Aus ökologischen und zunehmend aus wirtschaftlichen Gründen wird für viele Zwecke im Haushalt, Gewerbe und Industrie Regenwasser eingesetzt. Sowohl aus technischen als auch aus hygienischen Gründen ist es wichtig, das Regenwasser vor dem Ableiten in einen Vorratsbehälter zu reinigen. Es sind Auffang- und Filtervorrichtungen für Regenwasser im Fallrohr eines Hauses vor dem Speicherzulauf bekannt: DE 3812136 A1, DE 3139304 A1, G 8813460.1. Aus DE 3812136 A1 ist eine Vorrichtung zum Ableiten von Regenwasser aus einem Regenrohr mit integriertem Filter bekannt. Mittels Ausbildung von adhäsiven Wechselwirkungen zwischen den unterhalb der konischen Siebfläche angebrachten schuppenartigen Lamellen und dem oberhalb der Siebfläche auftreffenden Wasser wird ein Abführen des durch die Siebfläche getretenen Wassers in den Vorratsbehälter erreicht.

Ein wesentlicher Nachteil dieser Vorrichtung ist der stark abnehmende Wassererfassungsgrad beim Ansteigen der Durchflußmengen.

Der in Schutzansprüchen 1-10 angegebenen Erfindung liegt die Aufgabe zugrunde, das Wasser von Grob- und Feinschmutzpartikeln gleichzeitig zu reinigen, wobei ein hoher Anteil des derart gereinigten Wassers an der Gesamtmenge gewährleistet, der Querschnitt der Vorrichtung nicht wesentlich verengt wird und die Vorrichtung sowie insbesondere die Siebflächen sich selbstständig reinigen.

Diese Aufgabe wird dadurch gelöst, daß das Wasser in einem zylindrischen Gehäuse zwangsweise über einen konischen Abweiser in einen ringförmigen Spaltraum mit einer oder mehreren Siebvorrichtungen über mindestens zwei separat voneinander, in der Reinigungswirkung ergänzend wirkende, in Fließrichtung des Wassers stets feinmaschiger werdenden Siebvorrichtungen geleitet wird, wobei jede Filterfläche derart angeordnet ist, daß der Schmutz in den Schmutzanschluß und das durch die Siebfläche getretene und derart gereinigte Wasser in den Vorratsbehälter abgeführt wird.

Die mit der Erfindung erzielten Vorteile bestehen insbesondere darin, daß eine gleichzeitige Reinigung des Wassers von Grob- und Feinschmutzpartikeln und eine wesentliche Verbesserung des Wirkungsgrades bei ungehinderter Schmutzabführung bei Verstopfen der Filterflächen möglich wird.

Eine vorteilhafte Ausgestaltung der Erfindung ist in den Schutzansprüchen 4 und 6 angegeben. Die Weiterbildung nach Anspruch 2 und 6 verhindert das Eindringen von gröberen Partikeln in der Ringspalt und dessen Verstofung.

Eine weitere vorteilhafte Ausgestaltung der Erfindung ist im Schutzanspruch 7 angegeben. Die Weiterbildung nach Anspruch 3 ermöglicht eine Vergrößerung der Siebflache und gewährleistet somit, daß bei extremen Regenereignissen möglichst viel Wasser durch die erste Siebvorrichtung hindurchtreten kann.

Eine zusätzliche vorteilhafte Ausgestaltung der Erfindung ist im Schutzanspruch 8 angegeben. Die Weiterbildung nach Anspruch 8 ermöglicht es, die Vorrichtung an Rohre mit unterschiedlichen Durchmessern anzuschließen.

Ein Ausführungsbeispiel der Erfindung wird im folgenden näher beschrieben. Es zeigen:
Fig. 1 das Funktionsprinzip der Filtervorrichtung,
Fig. 2 die Filtervorrichtung,

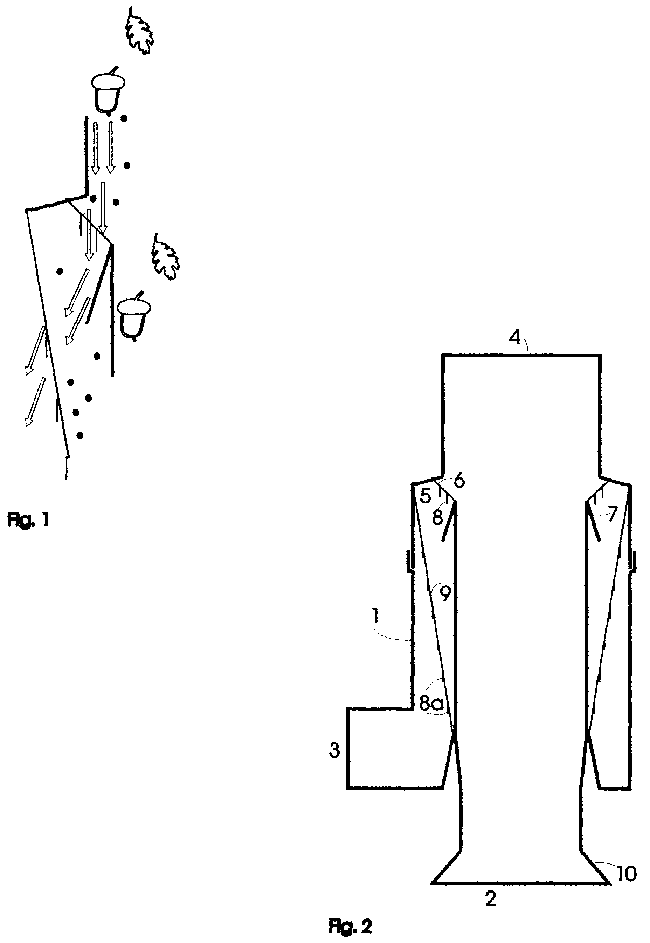

Das Regenwasser wird von den Dachauffangflächen über Fallrohre abgeleitet. Im Fallrohr in einer gut zugänglichen Höhe wird die Filtervorrichtung (1) gemäß Fig. 2 eingebaut. Der Anschlußstutzen (2) für das verschmutzte Regenwasser wird mit dem Entwässerungssytem und der Anschlußstutzen (3) für das gereinigte Wasser mit einem Behälter verbunden.

Die folgende Vorrichtung wird vorzugsweise aus Kunststoff im Blas- oder Rotationssyntherverfahren hergestelt, da damit das komplette Außengehäuse in einem Arbeitsschritt hergestellt wird.

Das Regenwasser tritt über den oberen Anschluß (4) in die Filtervorrichtung. Bei einem genügend hohen Vorlauf und einer senkrechten Ausrichtung der Regenrohre fließt das Regenwasser gleichmäßig verteilt über den gesamten Umfang an der Wandung des Gehäuses entlang. Der Ringspalt (5) vor dem konischen Abweiser (7) ist mit einer ersten grobmaschigen Filtervorrichtung (6) versehen. Der Grobschmutz wird von dieser zurückgehalten und gelangt somit nicht in den Ringspalt. Damit der Schmutz von dem Filtergewebe selbstständig abgespült wird, ist dieses um mindestens 45 Grad bezogen auf die horizontale Ebene geneigt. Am Ende des Rohrstutzens "reißt" die Strömung teils ab, teils folgt sie der Gehäusewandung und zieht sich zu einem großen Teil radial nach Außen. Dadurch wird auch das Filtergewebe, welches seitlich und unterhalb der Abreißkante angeordnet ist, vollständig für die Filtration ausgenutzt. Da der obere Rand der ersten Siebvorrichtung nicht direkt angeströmt wird, kann sich an dieser Stelle kein Grobschmutz absetzen und die Vorrichtung großflächig verstopfen. Unterhalb des Filtergewebes (6) sind Ringe (8) als Abstreiflamellen angebracht. Das Wasser, welches nicht an der Gehäusewandung hinter die Abreißkante fließt, trifft auf den konischen Abweiser (7), welcher um ca. 135 Grad aus der Vertikale geneigt ist, und wird von diesem auf die zweite Siebvorrichtung (9) geleitet. Die zweite Siebvorrichtung ist wesentlich feinmaschiger (Maschenweite ca. 50-100µm) als die erste, deren Maschenweite ca. 1-5mm beträgt. Auf Grund der kleineren Maschenweite ist die zweite Filterfläche wesentlich größer als die erste. Darüberhinaus weist die zweite Filterfläche einen höheren Anstellungswinkel von ca. 155 Grad auf. Auch unterhalb der zweiten Filterfläche sind Abstreiflamellen (8a) angebracht. Diese verhindern, daß das Wasser entlang der Filteroberfläche abfließen kann, ohne durch diese zu treten.

Der Wasserstrom wird somit von der Gehäusewandung durch die erste Siebfläche (6) geleitet und von dem konischen Abweiser (7) auf die zweite Siebfläche (9) gelenkt. Dabei wird der im Wasser vorhandene Grobschmutz wie Blätter, Äste, Samenkapseln Nadeln usw. in den Kanalanschluß abgeführt.

Der Feinschmutz kommt zusammen mit dem Wasser auf das zweite Sieb. Nach Passieren der zweiten Siebfläche wird der Wasserstrom zum Austrittstutzen (3) abgeführt. Der Fein-Schmutz, wie Staub, Flugpollen, Sandkörner u.a. der das erste Sieb passieren konnte, wird nun an der zweiten Siebfläche abgeschieden und mit dem nachströmenden Wasser von der Siebfläche in den Kanal abgespült.

Der untere Anschluß weist am unteren Ende vier stegförmige Ausformungen (10), die nach unten stetig im Durchmesser 5 zunehmen. Durch Kürzen der Stege kann die Vorrichtung in Rohre mit unterschiedlichen Durchmessern eingebaut werden.

Eine besonders günstige Ausführung der erfindungsgemäßen Filtervorrichtung für den Regenwasser-Einsatz wird dadurch erreicht, wenn der konische Abweiser (7) und die erste Siebvorrichtung (6) die gleichen Abmesungen aufweisen. Nach Umdrehen der miteinander kraftschlüssig verbundenen Teile, so daß der konische Abweiser oben und das erste Sieb nach unten gerichtet ist, wird der Wasserfluß komplett abgespert, was für den Winterbetrieb wichtig sein kann.

Bei größeren Durchflüssen kann die zweite Siebvorrichtung auch mehrteilig ausgebildet werden, so daß das Wasser im Zick-Zack-Fluß in Anlehnung an DE 44 21 035.3 durch den Ringspalt fließt und jeweils durch die rechts- oder links gelegene Siebfläche hindurchtreten kann. Hierbei ist zu beachten, daß über eine oder mehrere Rohrverbindungen das Wasser von der weiter innen liegenden Siebfläche nach außen abgeletet werden muß.

## Patentansprüche

1. Verfahren zum Aussondern von Schmutzpartikeln oberhalb der vorgegebenen Maschenweite aus dem Wasser oder anderer Flüssigkeit, wobei ein selbstständiges Abführen von Schmutzpartikeln in den Schmutzanschluß und des derart gereinigten Wassers in einen Vorratsbehälter erfolgt,
gekennzeichnet dadurch,
daß das Wasser zwangsweise über einen konischen Abweiser in einen ringförmigen Spaltraum mit einer oder mehreren Siebvorrichtungen geleitet wird, wobei bei verstopfter Siebeinrichtung der freie Abfluß des insgesamt zuströmenden Wassers jederzeit gegeben ist.

2. Verfahren nach Schutzanspruch 1,
gekennzeichnet dadurch,
daß das Wasser über mindestens zwei separat voneinander, in der Reinigungswirkung ergänzend wirkende, in Fließrichtung des Wassers stets feinmaschiger werdenden Siebvorrichtungen geleitet wird.

3. Verfahren nach Schutzanspruch 1,2
gekennzeichnet dadurch,
daß das Wasser von dem konischen Abweiser auf eine oder mehrere nacheinander angeordnete Filterflächen geleitet wird, wobei jede Filterfläche derart angeordnet ist, daß der Schmutz in den Schmutzanschluß und das durch die Siebfläche getretene und derart gereinigte Wasser in den Vorratsbehälter abgeführt wird.

4. Vorrichtung zur Ausübung des Verfahrens nach Anspruch 1,2,3 zwecks Aussonderung von Schmutzpartikeln oberhalb der vorgegebenen Maschenweite aus dem Wasser oder anderer Flüssigkeit, wobei das Wasser in einem zylindrischen im wesentlichen zweigeteilten Gehäuse mit Rohranschlüssen aus vertikaler Richtung über Siebe geführt wird und ein selbstständiges Abführen von Schmutzpartikeln mit einem kleinem Wasseranteil in den Schmutzanschluß und des derart gereinigten Wassers in einen Vorratsbehälter erfolgt,
gekennzeichnet dadurch,
daß der konische Abweiser in einem Winkel größer 90 Grad, ausgehend von der Vertikale, zur Filterfläche geneigt ist und soweit den Querschnitt des zylindrischen Gehäuses von der Gehäusewandung nach Innen überdeckt, daß ein ungehinderter Schmutzabfluß aus der Vorrichtung gegeben ist, wobei der Ringraum zwischen dem oberen Rand des konischen Abweisers und der Innenwandung des zylindrischen Gehäuses von einem Sieb überspannt wird.

5. Vorrichtung nach Schutzanspruch 1,2,3,4 einzeln, gemeinsam oder in Kombination
gekennzeichnet dadurch,
daß jede Filterfläche eine oder mehrere unterhalb dieser angeordnete, im wesentlichen lotrecht stehende und in sich geschlossene Ahstreiflamellen aufweist.

6. Vorrichtung nach Schutzanspruch 1,2,3,4,5 einzeln, gemeinsam oder in Kombination
gekennzeichnet dadurch,
daß das Sieb, welches zwischen der Gehäuseinnenwandung und dem oberen Rand des konischen Abweisers angeordnet ist, 5 eine Neigung von mindestens 30 Grad ausgehend von einer horizontalen Ebene aufweist.

7. Vorrichtung nach Schutzanspruch 1,2,3,4,5,6 einzeln, gemeinsam oder in Kombination
gekennzeichnet dadurch,
daß das Sieb, welches zwischen der Gehäuseinnenwandung und dem konischen Abweiser angeordnet ist, mit dem oberen Rand in einer Gehäusevertiefung anliegt und unterhalb und nach hinten von der Abrißkante des herunterfließenden Wassers versetzt angeordnet ist.

8. Vorrichtung nach Schutzanspruch 1,2,3,4,5,6,7 einzeln, gemeinsam oder in Kombination
gekennzeichnet dadurch,
daß das Gehäuse am unteren und oberen Verbindungsstück Universalanschlüsse, welche als mehrere radial nach außen verlaufende, zueinander versetzt angeordnete schmale Aufwei tungen ausgebildet sind und die Aufweitungen am unteren Anschluß in vertikalen Richtung von oben nach unten im Durchmesser zunehmen, aufweist.

9. Vorrichtung nach Schutzanspruch 1,2,3,4,5,6,7,8 einzeln, gemeinsam oder in Kombination
gekennzeichnet dadurch,
daß die Filterfläche über dem Ringraum zwischen dem oberen Rand des konischen Abweisers und der Innenwandung des zylindrischen Gehäuses mit dem konischen Abweiser kraft schlüssig verbunden ist.

10. Vorrichtung nach Schutzanspruch 1,2,3,4,5,6,7,8,9 einzeln, gemeinsam oder in Kombination
gekennzeichnet dadurch,
daß der untere Rand des konischen Abweisers mit dem unteren Rand der Siebvorrichtung sich mindestens in der gleichen Vertikale befinden oder sich überdecken.
